# DEMANDE DE BREVET EUROPEEN

(11) **EP 1 263 105 A1**
(43) Date de publication de la demande: **04.12.2002**
(21) Numéro de dépôt: 02291321.4
(22) Date de dépôt: 30.05.2002
(51) Int. Cl.: H02G 3/06

(54) **Dispositif d'angle plat ou de dérivation pour goulottes**

(30) Priorité: 01.06.2001 FR 0107252
(71) Demandeur: LEGRAND, F-87000 Limoges (FR); LEGRAND SNC, F-87000 Limoges (FR)
(72) Inventeur: Gautier, Bruno, 72140 Sille le Guillaume (FR); Jadaud, Alain, 72240 Tennie (FR)
(74) Mandataire: CABINET BONNET-THIRION

(57) **Abrégé**

L'invention concerne un dispositif d'angle plat ou de dérivation (100) à disposer entre les socles de goulotte formant entre eux un angle dans un même plan, ledit dispositif comprenant une platine (110) et un cache (130) à rapporter sur ladite platine.

Selon l'invention, il comporte au moins un support (120) à rapporter sur un desdits socles comprenant des moyens de montage (124, 125) dudit cache, et au moins une des parois latérales (114, 115) de ladite platine porte un moyen de support (118, 118', 117) d'au moins un tronçon de couvercle de fermeture de l'autre desdits socles, de telle sorte que lesdits tronçons de couvercle de fermeture des deux socles s'étendent au-dessus du fond de raccordement (111) de ladite platine et participent ainsi à sa fermeture, le cache (130) étant adapté à recouvrir lesdits tronçons de couvercle de fermeture mis en place sur lesdits socles.

## Description

La présente invention concerne un dispositif d'angle plat ou de dérivation à disposer entre les socles d'au moins deux tronçons de goulotte formant entre eux un angle dans un même plan, ledit dispositif comprenant, d'une part, une platine présentant un fond de raccordement des fonds desdits socles et au moins deux parois latérales situées sur au moins deux bords dudit fond de raccordement, et, d'autre part, un cache à rapporter sur ladite platine au-dessus dudit fond de raccordement.

Un tel dispositif d'angle plat ou de dérivation est notamment décrit dans le document EP 0 840 417.

L'utilisation de platines dans les dispositifs d'angle plat ou de dérivation permet de couper les tronçons de goulotte à l'équerre et non pas à l'onglet et de positionner correctement les tronçons de goulotte les uns par rapport aux autres.

Par ailleurs, on connaît des dispositifs d'angle plat ou de dérivation à rapporter entre les socles de tronçons de goulotte coupés à l'onglet pour être disposés de manière jointive l'un par rapport à l'autre.

C'est le cas des dispositifs décrits notamment dans les documents FR 2 689 202 et EP 0 933 852.

En particulier, selon le document EP 0 933 852, le dispositif d'angle plat ou de dérivation comporte un cache ou joint par compartiment qui forme un angle plat et un élément de couvercle ou contre-joint qui recouvre l'ensemble des joints positionnés sur chacun des compartiments des socles de goulotte à raccorder.

Toutefois, la coupe en onglet des socles de goulotte est délicate à réaliser et est rarement jointive.

Par rapport à l'ensemble de l'état de la technique précité, la présente invention propose un nouveau dispositif d'angle plat ou de dérivation dont la mise en place est simple sur les tronçons de goulotte, qui permet l'accès à certains compartiments desdits tronçons de goulotte sans possibilité d'accès aux autres compartiments et qui minimise le nombre de pièces utilisées pour la fermeture de la partie en angle faisant la jonction entre les deux tronçons de goulotte.

Plus particulièrement, la présente invention concerne un dispositif d'angle plat ou de dérivation tel que défini en introduction, caractérisé en ce qu'il comporte au moins un support à rapporter sur un desdits socles, entre les ailes latérales de ce socle ou entre une de ses ailes latérales et une cloison de fractionnement portée par le fond dudit socle, ce support comprenant des moyens de montage du cache et étant destiné à supporter l'extrémité coupée d'un tronçon de couvercle de fermeture dudit socle ou d'un compartiment de ce dernier, et en ce qu'au moins une desdites parois latérales de ladite platine porte, sur sa face interne, un moyen de support d'au moins un tronçon de couvercle de fermeture de l'autre desdits socles ou d'un compartiment de ce socle, de telle sorte que lesdits tronçons de couvercle de fermeture des deux socles s'étendent au-dessus du fond de raccordement de ladite platine et participent ainsi à sa fermeture, le cache étant adapté à recouvrir lesdits tronçons de couvercle de fermeture mis en place sur lesdits socles.

D'autres caractéristiques non limitatives et avantageuses du dispositif d'angle plat ou de dérivation conforme à l'invention sont les suivantes :
- ledit support est situé du côté intérieur de l'angle formé par les socles desdits tronçons de goulotte ;
- le support se présente sous la forme d'une barrette portant, à ses extrémités libres, des moyens d'encliquetage sur les retours des ailes latérales du socle du tronçon de goulotte ou sur les retours d'une aile latérale et d'une cloison de fractionnement de ce socle ;
- la face externe du support porte au moins un plot disposé transversalement à la direction longitudinale dudit support et dont une extrémité forme une butée pour le bord d'extrémité coupé d'un tronçon de couvercle de fermeture ;
- le support porte, sur sa face externe, une pluralité de plots répartis sur toute la longueur dudit support ;
- la face externe du support porte au moins une nervure disposée transversalement à la direction longitudinale du support et dont une extrémité forme une butée pour le bord d'extrémité coupé d'un tronçon de couvercle de fermeture ;
- le support porte, sur sa face externe, une pluralité de nervures réparties sur toute la longueur dudit support ;
- ledit support comporte une gorge, qui s'étend sur un de ses côtés longitudinaux, et qui est apte à recevoir une patte longitudinale portée par le tronçon de couvercle de fermeture de l'autre socle par rapport à celui sur lequel est rapporté ledit support, ou d'un compartiment de ce socle ;
- ledit support est constitué de modules séparables ;
- chaque module séparable dudit support comporte, à son extrémité la plus éloignée d'un autre module séparable adjacent, des moyens d'encliquetage sur le retour d'une aile latérale ou d'une cloison de fractionnement du socle ;
- le support comporte un module de base rattaché à un module séparable, ce module de base étant positionné le plus à l'intérieur de l'angle formé par les socles de tronçons de goulotte, ce module de base comportant, à ses deux extrémités, des moyens d'encliquetage sur les retours des ailes latérales dudit socle ou sur les retours d'une aile latérale et d'une cloison de fractionnement de ce socle, et comprenant lesdits moyens de montage dudit cache ;
- le support comporte, à une extrémité libre, deux bords tombants disposés à l'équerre et aptes à établir la jonction entre les ailes latérales intérieures desdits socles ;
- les moyens de montage du cache sur le support comprennent, d'une part, sur ledit support, un puits et un logement d'encliquetage qui débouchent sur sa face externe, et, d'autre part, sur la face interne dudit cache, une tourelle destinée à s'engager dans ledit puits et une dent d'encliquetage destinée à s'introduire dans ledit logement d'encliquetage pour s'accrocher sur le bord interne de ce dernier ;
- les parois latérales de ladite platine sont disposées à l'équerre pour établir la jonction entre les ailes latérales extérieures des socles de tronçons de goulotte à raccorder, et portent chacune, sur leur face interne, des moyens de support d'un tronçon de couvercle de fermeture de l'autre socle par rapport à celui sur lequel est rapporté ledit support, ou d'un compartiment de ce socle ;
- une des parois latérales de la platine porte, sur sa face interne, des moyens de support d'un tronçon de couvercle de fermeture d'un compartiment du socle sur lequel est rapporté ledit support ;
- les parois latérales disposées à l'équerre comprennent un rebord permettant le maintien du cache sur la platine ;
- le fond de raccordement de la platine porte des plaquettes s'étendant perpendiculairement audit fond de raccordement et disposées deux à deux à l'équerre dans le prolongement de nervures portées par les fonds des socles pour l'encliquetage de cloisons de fractionnement, ces plaquettes étant chacune destinées à soutenir la partie de chaque cloison de fractionnement qui s'étend au-delà de chaque socle sur le fond de raccordement de ladite platine ;
- le fond de raccordement de la platine présente deux bords libres à l'équerre destinés chacun à s'abouter à un bord coupé d'un fond d'un socle de tronçon de goulotte à raccorder, chaque bord libre portant en saillie deux languettes flexibles aptes, lors de la mise en place de la platine entre les deux socles, à se positionner de part et d'autre d'une nervure portée par le fond d'un socle pour ajuster le positionnement de ladite platine par rapport auxdits socles ;
- le fond de raccordement de la platine comporte deux parties sécables disposées à l'équerre ;
- le cache comporte à une extrémité deux bords tombants disposés à l'équerre, aptes à établir la jonction entre les ailes latérales intérieures desdits socles ; et
- le cache comporte deux parties sécables disposées à l'équerre.

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 est une vue schématique en perspective éclatée d'un mode de réalisation du dispositif d'angle plat ou de dérivation selon l'invention ;
- la figure 2a est une vue en perspective d'un côté du support du dispositif représenté sur la figure 1 :
- la figure 2b est une vue en perspective de l'autre côté du support représenté sur la figure 2a ;
- la figure 2c est une vue de côté du support représenté sur la figure 2a ;
- la figure 2d est une vue de dessus du support représenté sur la figure 2a ;
- les figures 3 à 7 sont des vues schématiques en perspective des différentes étapes de mise en place du dispositif d'angle plat ou de dérivation représenté sur la figure 1 entre deux socles de tronçons de goulotte, chaque socle monocompartimental étant fermé par un tronçon de couvercle de fermeture ;
- les figures 8a et 8b sont des vues en coupe d'un socle de tronçon de goulotte abouté au dispositif représenté sur la figure 1, montrant plus particulièrement la mise en place du cache dudit dispositif ;
- la figure 8c est un agrandissement de la zone VIIIc de la figure 8b ;
- les figures 9 à 13 sont des vues schématiques en perspective des différentes étapes de mise en place du dispositif représenté sur la figure 1 entre deux socles de tronçons de goulotte, chaque socle étant divisé en deux compartiments par une cloison de fractionnement rapportée sur le fond du socle, chaque compartiment étant fermé par un tronçon de couvercle de fermeture ;
- la figure 14 est une variante de réalisation du support du dispositif d'angle plat ou de dérivation représenté sur la figure 1 ;
- les figures 15 et 16 représentent la mise en place du dispositif d'angle plat ou de dérivation comprenant le support représenté sur la figure 14 entre deux socles monocompartimentaux de tronçons de goulotte.

En préliminaire, on notera que les éléments identiques ou similaires des différents modes de réalisation représentés sur les différentes figures seront, dans la mesure du possible, référencés par les mêmes signes de référence et ne seront pas décrits à chaque fois.

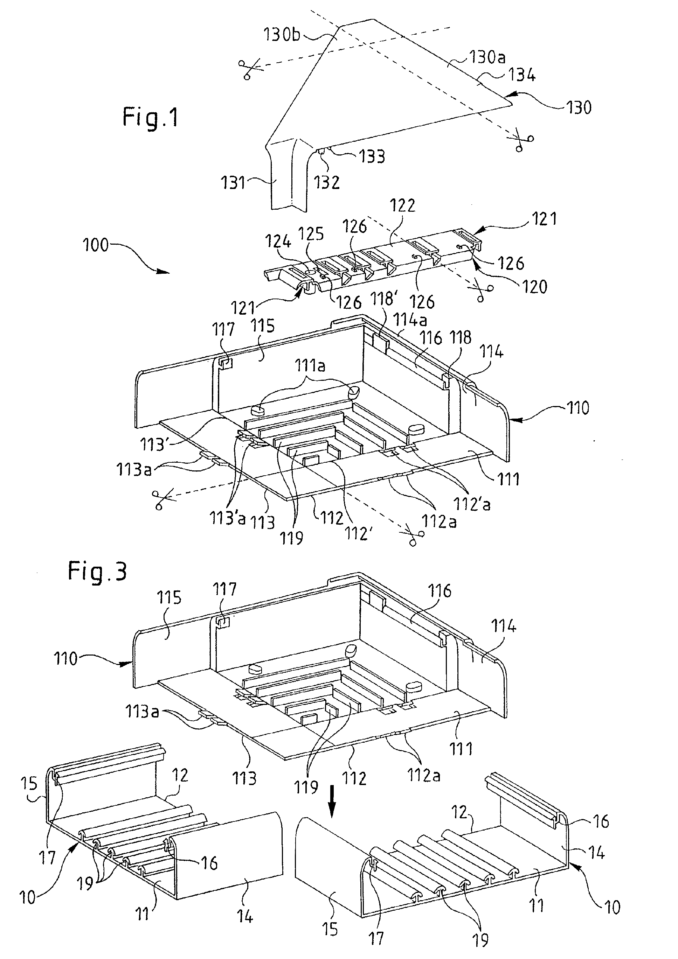

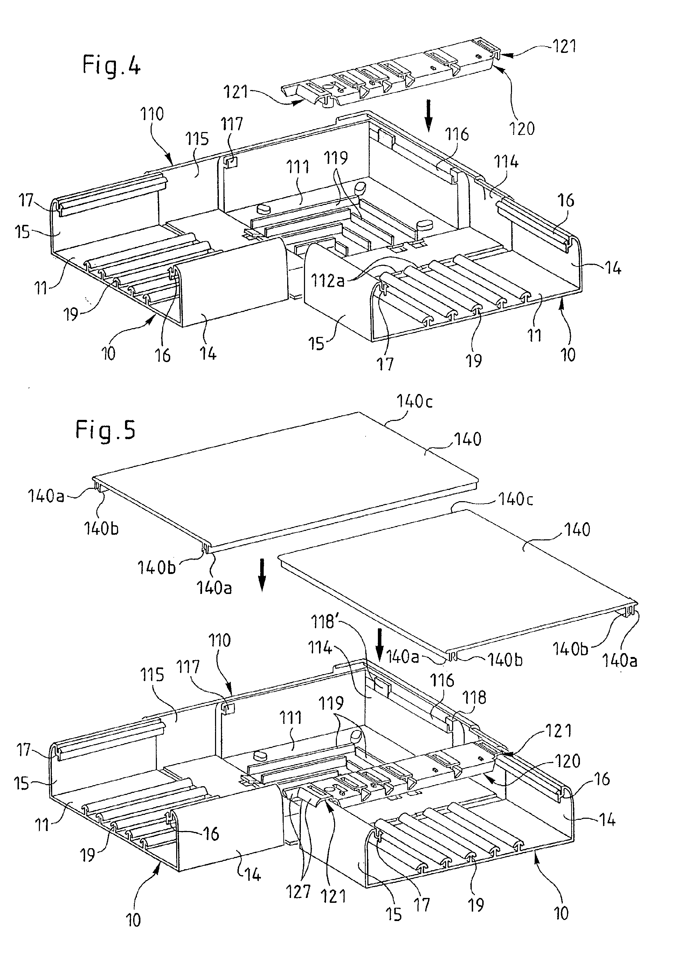

Sur la figure 1, on a représenté un dispositif d'angle plat ou de dérivation 100 à disposer entre les socles 10 d'au moins deux tronçons de goulotte formant entre eux un angle, ici un angle droit, dans un même plan (voir figure 3).

Comme le montre plus particulièrement la figure 3, chaque socle 10 de tronçon de goulotte comporte, de manière connue en soi, un profil sensiblement en U avec un fond 11 et deux ailes latérales 14, 15 parallèles, chacune des ailes latérales 14, 15 comportant, à son extrémité libre, un retour 16, 17 dirigé vers l'intérieur du socle 10. Ainsi, les retours 16, 17 des ailes latérales 14, 15 de chaque socle 10 sont dirigés l'un vers l'autre.

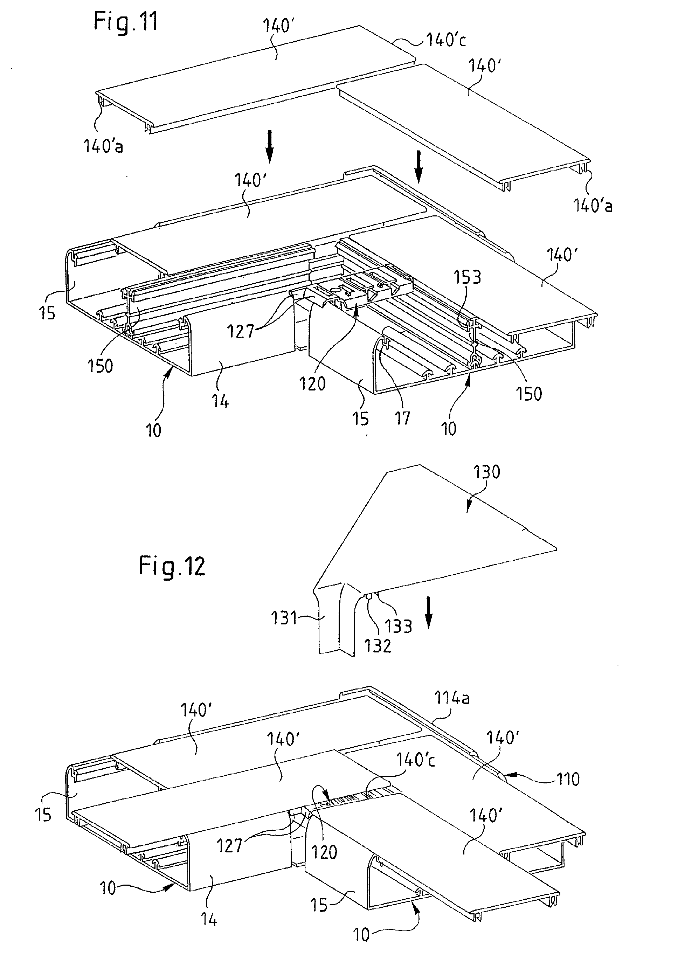

Chaque retour 16, 17 de chaque aile latérale 14, 15 est conformé en une gorge longitudinale avec, à l'extérieur de cette gorge, un cran d'encliquetage pour le montage par encliquetage d'un tronçon de couvercle de fermeture 140 (voir figure 5) ou 140' (voir figure 11).

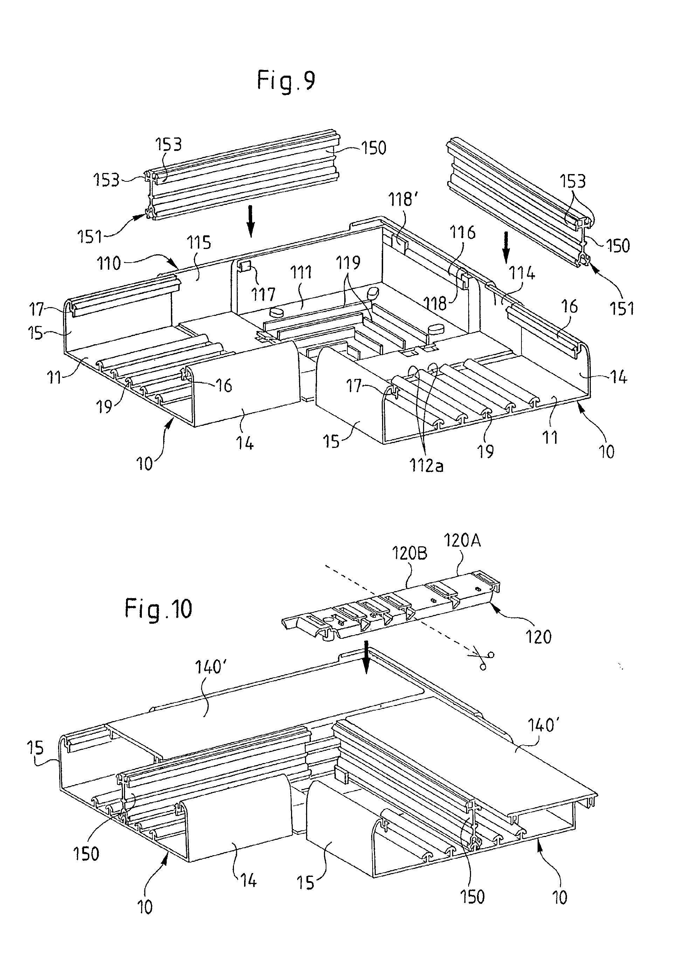

Le fond 11 de chaque socle porte des nervures 19 longitudinales parallèles pour le montage éventuel d'une ou plusieurs cloisons de fractionnement 150 (voir figure 9) ou de séparation.

Le dispositif d'angle plat ou de dérivation 100 représenté sur les différentes figures comporte une platine 110 présentant un fond de raccordement 111 des fonds 11 desdits socles 10 et au moins deux parois latérales 114, 115 situées sur au moins deux bords dudit fond de raccordement 111.

Les parois latérales 114, 115 de la platine 110 présentent chacune, globalement, un profil similaire au profil des ailes latérales 14, 15 des socles 10 des tronçons de goulotte à raccorder, et sont disposées à l'équerre sur les bords extérieurs dudit fond de raccordement 111 de la platine 110 pour établir la jonction entre les ailes latérales 14, 15 extérieures des socles 10 des tronçons de goulotte à raccorder.

On entend ici par "extérieur" et par "intérieur", ce qui se situe à l'extérieur respectivement à l'intérieur de l'angle formé entre les socles 10 des tronçons de goulotte.

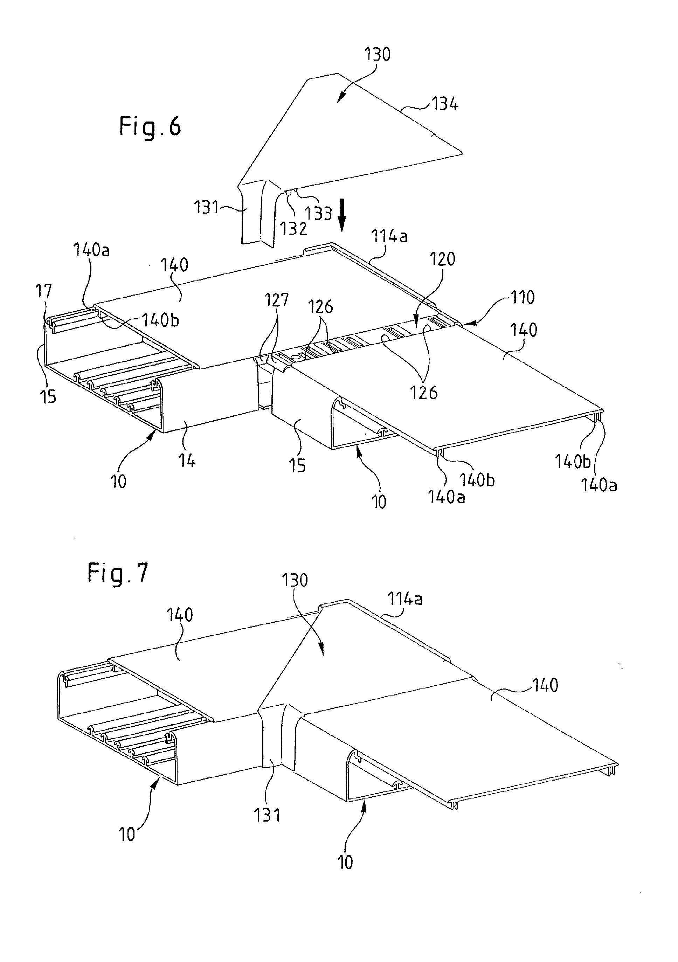

Selon l'exemple représenté sur la figure 1, chaque paroi latérale 114, 115 de la platine 110 porte, sur sa face interne, des moyens de support 118, 118', 117 d'un même tronçon de couvercle de fermeture 140 ; 140' apte à fermer un desdits socles 10 (voir figure 6) ou un compartiment de celui-ci (voir figure 10). Il s'agit ici du socle 10 sur lequel n'est pas rapporté un support 120 décrit dans le détail ultérieurement.

Les moyens de support de la paroi latérale 114 de la platine 110 comprennent ici deux plots 118, 118' espacés l'un de l'autre et dont la face supérieure constitue une face d'appui d'une partie d'extrémité du tronçon de couvercle de fermeture 140 ; 140' concerné (voir figures 5, 6, et 10, 11).

Les moyens de support de l'autre paroi latérale 115 de la platine 110 comprennent ici un crochet 117 porté par la face interne de cette paroi latérale 115 et dans lequel s'engage une patte longitudinale 140a ; 140'a d'un tronçon de couvercle de fermeture 140 ; 140' dudit socle 10 (voir figure 5) ou d'un compartiment de ce dernier (voir figure 10).

En outre, la paroi latérale 114 de la platine 110 porte, également, sur sa face interne, des moyens de support, constitués ici par un moyen de rainure 116 associé au plot 118, qui permettent de supporter un bord longitudinal d'un tronçon de couvercle de fermeture 140' d'un compartiment d'un socle 10 d'un tronçon de goulotte à raccorder (voir figures 9 et 11). Il s'agit là du socle 10 sur lequel est rapporté ledit support 120 décrit dans le détail ultérieurement.

Comme le montre la figure 1, le fond de raccordement 111 de la platine 110 comporte des ouvertures oblongues 111 a au travers desquelles sont introduites des vis de fixation (non représentées) pour la fixation de la platine 110 sur la paroi support (non représentée) supportant les socles 10 des tronçons de goulotte à raccorder.

Le fond de raccordement 111 de la platine 110 porte des plaquettes 119 s'étendant perpendiculairement audit fond de raccordement 111 et disposées deux à deux à l'équerre dans le prolongement des nervures 19 portées par les fonds 11 des socles 10 des tronçons de goulotte à raccorder (voir figure 3). Ces plaquettes 119 sont chacune destinées à soutenir la partie de chaque cloison de fractionnement 150 qui s'étend au-delà de chaque socle 10 sur le fond de raccordement 111 de la platine 110 (voir figures 10 et 11).

De cette manière, la continuité des compartiments desdits socles 10 est assurée (voir figure 10).

En outre, le fond de raccordement 111 de la platine 110 présente deux bords libres 112, 113 disposés à l'équerre et destinés chacun à s'abouter à un bord coupé 12 d'un fond 11 d'un socle 10 de tronçon de goulotte à raccorder.

Chaque bord libre 112, 113 porte en saillie deux languettes flexibles 112a, 113a aptes, lors de la mise en place de la platine 110 entre les deux socles 10, à se positionner de part et d'autre d'une nervure 19 portée par le fond 11 du socle 10 correspondant, ici la nervure 19 centrale dudit socle 10, pour ajuster le positionnement en largeur de ladite platine 110 par rapport à chacun desdits socles 10.

La flexibilité des languettes 112a, 113a leur permet de s'effacer sous une cloison de fractionnement 150 rapportée sur la nervure 19 correspondante (voir figure 11).

Comme cela apparaît clairement sur la figure 1, le fond de raccordement 111 de la platine 110 comporte deux parties sécables disposées à l'équerre, chaque partie sécable étant délimitée entre chaque bord libre 112, 113 et une ligne sécable 112', 113'. Chaque ligne sécable 112', 113' est parallèle à chaque bord libre 112, 113 du fond de raccordement 111 de la platine 110.

Ainsi, en coupant ces parties sécables du fond de raccordement 111 de la platine 110, on peut adapter ladite platine 110 à une largeur plus petite de socle de goulotte.

Avantageusement, sur chacune des lignes sécables 112', 113' du fond de raccordement 111 de la platine 110 sont prévues des languettes 112'a, 113'a faisant saillie dudit fond de raccordement. Ces languettes 112'a, 113'a sont identiques aux languettes flexibles 112a, 113a faisant saillie des bords libres 112, 113 du fond de raccordement 111, de manière que, lorsqu'on sectionne le fond de raccordement 111 afin d'en enlever les parties sécables, on retrouve la même disposition de languettes 112'a, 113'a portées par les nouveaux bords libres 112', 113' dudit fond de raccordement 111 de plus petite largeur.

Le dispositif d'angle plat ou de dérivation 100 comporte par ailleurs un support 120 à rapporter sur un desdits socles 10, entre les ailes latérales 14, 15 de ce socle 10 (voir figure 5) ou entre une de ses ailes latérales 15 et une cloison de fractionnement 150 portée par le fond 11 dudit socle (voir figure 11). Ce support 120 est destiné à supporter le bord d'extrémité coupé 140c ; 140'c d'un tronçon de couvercle de fermeture 140 ; 140' dudit socle 10 ou d'un compartiment de ce dernier.

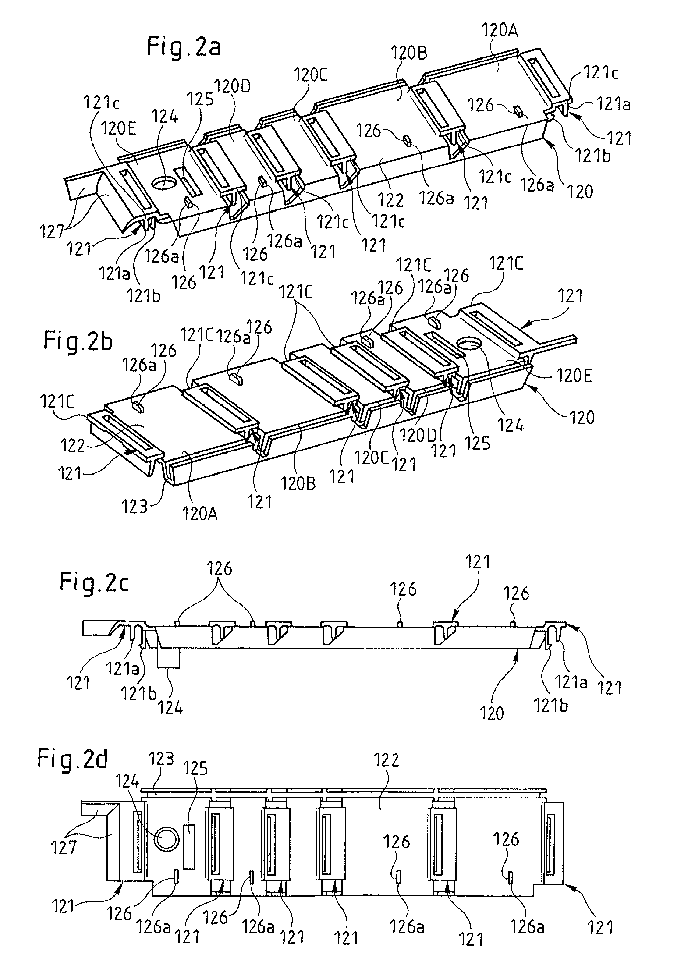

Selon le mode de réalisation représenté sur les figures 2a à 2d, le support 120 se présente sous la forme d'une barrette portant, à ses extrémités libres, des moyens d'encliquetage 121 sur les retours 16, 17 des ailes latérales 14, 15 du socle 10 du tronçon de goulotte concerné (voir figure 5) ou sur les retours 17, 153 d'une aile latérale 15 et d'une cloison de fractionnement 150 de ce socle 10 (voir figure 11).

Les moyens d'encliquetage 121 sont identiques ou similaires aux moyens d'encliquetage des tronçons de couvercle de fermeture 140 ; 140' et comprennent ici une patte 121a destinée à s'engager dans la gorge formée par le retour de l'aile latérale concernée du socle 10 et une dent d'encliquetage 121b destinée à venir s'encliqueter sur un talon s'étendant sous ladite gorge.

Comme le montrent plus particulièrement les figures 2a à 2d, la face externe 122 du support 120 porte une pluralité de plots 126 répartis sur toute la longueur du support 120. Chaque plot 126 est disposé transversalement à la direction longitudinale du support 120 et présente une extrémité 126a qui forme une butée pour le bord d'extrémité coupé 140c ; 140'c d'un tronçon de couvercle de fermeture 140 ; 140' du socle 10 sur lequel est rapporté le support 120, ou d'un compartiment de ce socle 10.

Comme cela apparaît clairement sur la figure 2d, la tranche 121c des moyens d'encliquetage 121 se situe légèrement en retrait des extrémités 126a des plots 126 pour que seules les extrémités 126a des plots 126 constituent des butées pour le bord d'extrémité coupé 140c ; 140'c du tronçon de couvercle de fermeture 140 ; 140' correspondant.

En outre, le support 120 comporte une gorge 123, qui s'étend sur un de ses côtés longitudinaux, et qui est apte à recevoir une patte longitudinale 140a ; 140'a portée par le tronçon de fermeture 140 ; 140' de l'autre socle 10 (par rapport à celui sur lequel est rapporté ledit support 120) ou d'un compartiment de ce dernier.

Ainsi, la position du support 120 sur ledit socle 10 est déterminée, puisqu'il doit se situer à l'extrémité de celui-ci, à la jonction avec ladite platine 110, de manière à ce que la gorge 123 dudit support s'étende dans le prolongement de la gorge formée par le retour 16 de l'aile latérale 14 correspondante de l'autre socle 10 disposé à l'équerre.

Comme le montrent plus particulièrement les figures 2a et 2b, le support 120 est constitué, avantageusement, de modules séparables 120A, 120B, 120C, 120D et chaque module séparable 120A, 120B, 120C, 120D comporte, à son extrémité la plus éloignée d'un autre module séparable adjacent, des moyens d'encliquetage 121 du type de ceux précédemment décrits, pour son encliquetage sur le retour 16, 153 d'une aile latérale 14 ou d'une cloison de fractionnement 150 du socle 10.

Ainsi, lorsque l'on sépare un module séparable du support 120, on retrouve la configuration des moyens d'encliquetage 121 du support 120 telle que représentée sur les figures 2a à 2d, alors que le support 120 a diminué en longueur pour s'adapter à une plus petite largeur de socle ou à la largeur d'un compartiment de ce dernier.

Le support 120 comporte toutefois un module de base 120E rattaché à un module séparable 120D, ce module de base 120E étant positionné le plus à l'intérieur de l'angle formé par les socles 10 de tronçons de goulotte par rapport aux autres modules séparables. Ce module de base 120E comporte, à ses deux extrémités, lesdits moyens d'encliquetage 121 sur les retours 16, 17 des ailes latérales 14, 15 dudit socle ou sur les retours 17, 153 d'une aile latérale 15 et d'une cloison de fractionnement 150 de ce socle 10.

Le support 120 comporte, par ailleurs, à une extrémité libre, destinée à être positionnée à l'intérieur de l'angle formé entre les socles 10 de tronçons de goulotte à raccorder, à la jonction entre les deux ailes latérales 14, 15 intérieures desdits socles 10 correspondants, deux bords tombants 127 disposés à l'équerre et aptes à établir la jonction entre les ailes latérales 14, 15 intérieures des socles 10.

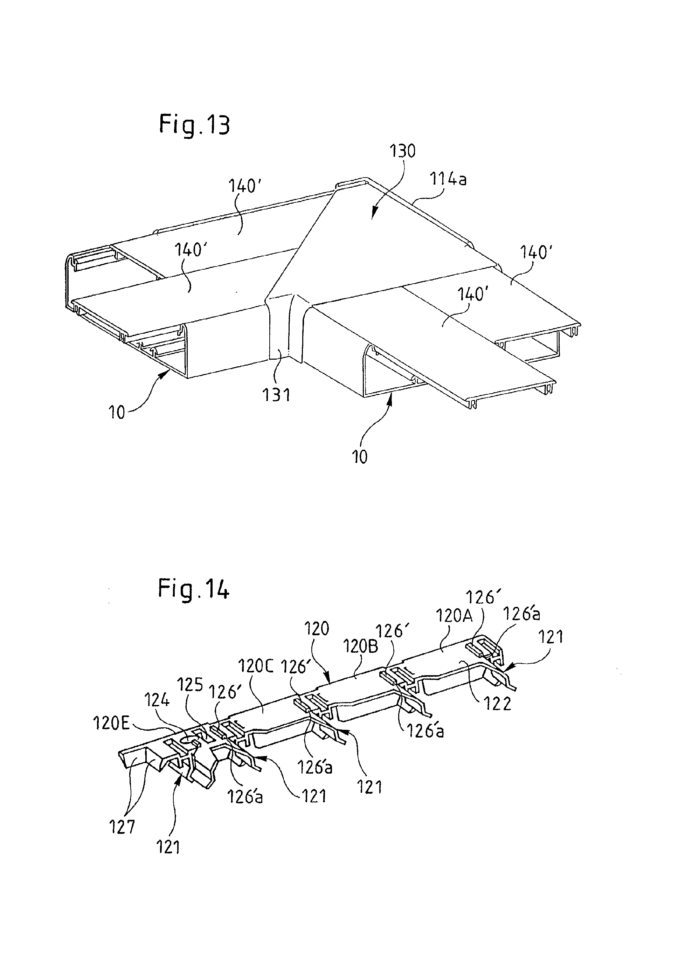

Sur la figure 14, on a représenté une variante du support 120 représenté sur les figures 2a à 2d, selon laquelle la face externe 122 du support 120 comporte au lieu des plots 126 des nervures 126' réparties sur toute la longueur du support et s'étendant chacune transversalement à la direction longitudinale dudit support 120, l'extrémité 126'a de chaque nervure 126' constituant une butée pour le bord d'extrémité coupé 140c ; 140'c d'un tronçon de couvercle de fermeture 140 ; 140'.

Selon cette variante, les moyens d'encliquetage 121 sont légèrement différents et comprennent ici une patte d'encliquetage destinée à s'encliqueter sous le retour correspondant de l'aile latérale concernée du socle du tronçon de goulotte à raccorder ou sous le retour de la cloison de fractionnement montée sur ledit socle.

Le dispositif d'angle plat ou de dérivation 100 représenté plus particulièrement sur la figure 1 comporte, en outre, un cache 130 à rapporter sur la platine 110 au-dessus de son fond de raccordement 111.

Ici, ce cache 130 se présente globalement sous la forme d'une plaque de forme asymétrique avec un bord oblique, un bord droit et un bord d'extrémité libre 134.

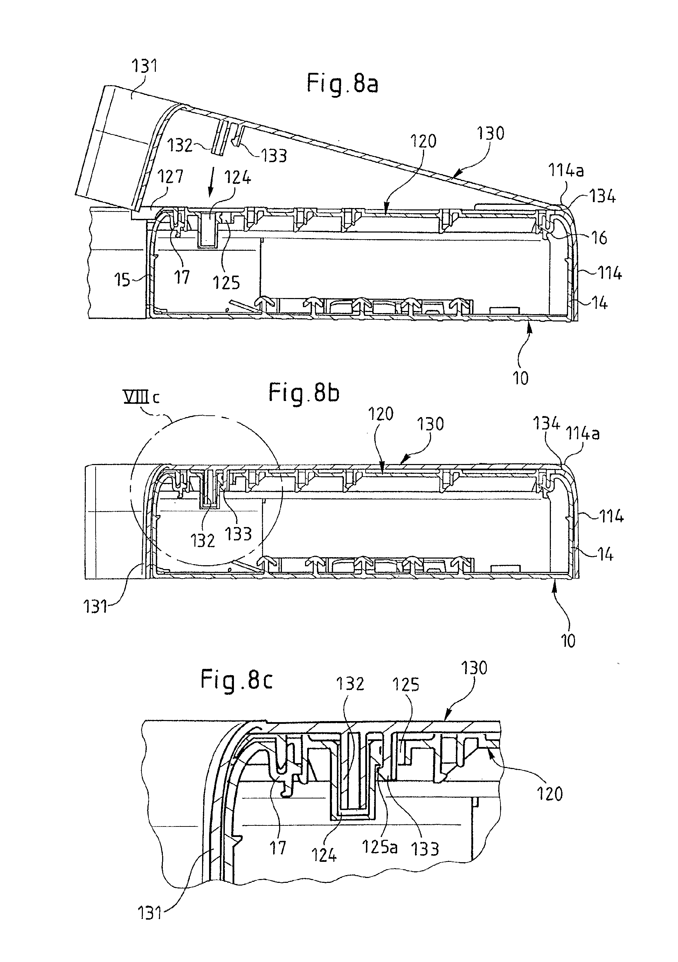

Il est prévu, avantageusement, sur le cache 130 et sur le support 120, des moyens de montage complémentaires qui comprennent, selon le cas typique représenté, d'une part, sur ledit support 120, un puits 124 et un logement d'encliquetage 125 situés sur le module de base 120E dudit support 120 et qui débouchent sur la face externe 122 de ce dernier, et, d'autre part, sur la face interne du cache 130, une tourelle 132 destinée à s'engager dans le puits 124 et une dent d'encliquetage 133 destinée à s'introduire dans le logement d'encliquetage 125 pour s'accrocher sur un bord interne 125a de ce dernier (voir figure 8C).

Ainsi, le cache 130 est avantageusement adapté à recouvrir les tronçons de couvercle de fermeture 140 ; 140' mis en place sur les socles 10, ces tronçons de couvercle de fermeture 140 ; 140' s'étendant au-dessus du fond de raccordement 111 de la platine 110 pour participer ainsi à la fermeture de l'angle situé entre les deux socles 10 de tronçons de goulotte à raccorder, et donc à la fermeture de la platine 110.

Le cache 130 comporte à une extrémité, située à l'opposé de son bord d'extrémité libre 134, deux bords tombants 131 disposés à l'équerre et aptes à établir la jonction entre les ailes latérales 14, 15 intérieures desdits socles 10.

Comme on peut le voir par exemple sur la figure 7, les parois latérales 114, 115 de la platine 110, disposées à l'équerre, comprennent un rebord 114a destiné à venir recouvrir le bord d'extrémité libre 134 du cache 130 pour maintenir ce dernier sur ladite platine 110 en le plaquant contre la face externe du tronçon de couvercle de fermeture 140 correspondant.

En outre, comme le montre plus particulièrement la figure 1, le cache 130 comporte, à proximité de son bord d'extrémité libre 134, deux parties sécables 130a, 130b disposées à l'équerre et dont la largeur correspond à la largeur des parties sécables du fond de raccordement 111 de la platine 110, de sorte que la longueur du cache peut être adaptée à la largeur du fond de raccordement 111 de la platine 110 en vue de mettre en oeuvre le dispositif d'angle plat ou de dérivation 100 pour une plus petite largeur de socle de tronçon de goulotte.

Bien entendu, les différentes pièces du dispositif d'angle plat ou de dérivation 100, c'est-à-dire la platine 110, le support 120 et le cache 130, sont chacune individuellement réalisées en une seule pièce, avantageusement par moulage d'une matière plastique.

En référence aux figures 3 à 8b, nous allons maintenant décrire la mise en place du dispositif d'angle plat ou de dérivation 100 représenté sur la figure 1, entre deux socles 10 monocompartimentaux de tronçons de goulotte disposés à angle droit dans un même plan.

Tout d'abord, comme le montre la figure 3, chacun des socles 10 de tronçons de goulotte à raccorder est positionné sur la paroi support (non représentée) pour former ici un angle égal à environ 90°. Puis, la platine 110 est placée entre les deux socles de sorte que les bords libres 112, 113 du fond de raccordement 111 de celle-ci viennent s'abouter aux bords coupés 12 des socles 10, le positionnement de la platine 110 étant guidé par les languettes flexibles 112a, 113a qui viennent se prendre de part et d'autre de chacune des nervures 19 centrales portées par les fonds 11 desdits socles 10.

La platine 110 du dispositif d'angle plat ou de dérivation est fixée par des vis de fixation (non représentées) sur ladite paroi support (non représentée).

La platine 110 autorise une tolérance par exemple de plus ou moins 10 mm de positionnement des socles 10 entre eux.

Comme le montre la figure 4, lorsque la platine 110 est positionnée entre les socles 10 de tronçons de goulotte à raccorder, les parois latérales 114, 115 de ladite platine recouvrent l'extrémité des ailes latérales 14, 15 extérieures des socles 10, le fond de raccordement 111 de la platine établissant une continuité entre les fonds 11 des socles 10.

Dans cette position, les plaquettes 119 portées par le fond de raccordement 111 de la platine 110 s'étendent dans le prolongement des nervures 19 portées par les fonds 11 desdits socles 10. Les extrémités desdites plaquettes 119 sont ici situées à distance des extrémités desdites nervures 19, cette distance étant créée par les parties sécables du fond de raccordement 111 de la platine 110.

Puis, comme le montre la figure 5, le support 120 est rapporté sur un desdits socles 10, en étant encliqueté sur les retours 16, 17 des ailes latérales 14, 15 de ce socle 10 à l'aide de ses moyens d'encliquetage 121.

Le support 120 est positionné à l'extrémité du socle 10, de telle sorte que ses bords tombants 127 disposés à l'équerre établissent la jonction entre les ailes latérales 14, 15 intérieures des socles 10 et que sa gorge longitudinale, non référencée sur la figure 5, se situe dans le prolongement de la gorge formée par le retour 16 de l'aile latérale 14 du socle 10 sur lequel n'est pas rapporté le support 120.

Puis, les tronçons de couvercle de fermeture 140 sont rapportés sur chacun des socles 10 de tronçons de goulotte à raccorder.

Un tronçon de couvercle de fermeture 140 est rapporté sur le socle 10 ne supportant pas le support 120, en étant encliqueté par ses moyens d'encliquetage 140a, 140b sur les retours 16, 17 des ailes latérales 14, 15 de ce socle 10, et il s'étend au-dessus du fond de raccordement 111 de la platine 110 pour fermer l'angle situé entre les socles 10 en venant s'appuyer sur les faces supérieures des plots 118, 118' portés par la face interne de la paroi latérale 114 de la platine 110.

En outre, une patte longitudinale 140a de ce tronçon de couvercle de fermeture 140, située à l'extérieur de l'angle formé entre lesdits socles 10, s'engage dans le crochet 117 porté par l'autre paroi latérale 115 de la platine 110 de façon à être supportée par celle-ci.

L'autre patte longitudinale 140a de ce tronçon de couvercle de fermeture 140, située à l'intérieur de l'angle formé entre lesdits socles, s'engage dans la gorge 123 du support 120.

Ainsi, ce tronçon de couvercle de fermeture 140 est positionné de manière rigide sur la platine 110, la rigidité mécanique de l'ensemble étant très bonne.

Puis, le tronçon de couvercle de fermeture 140 à monter sur le socle 10 sur lequel est rapporté le support 120 est positionné de manière à s'encliqueter par ses moyens d'encliquetage 140a, 140b sur les retours 16, 17 des ailes latérales 14, 15 dudit socle, son bord d'extrémité coupé 140c venant se positionner sur la face externe du support 120 en butée contre les plots 126 portés par celle-ci (voir figure 6).

Dans cette position, la face externe 122 du support 120 se situe à un niveau inférieur à celui du tronçon de couvercle de fermeture 140, seuls les plots 126 étant situés au niveau du bord d'extrémité coupé 140c de ce dernier.

Puis, comme le montrent les figures 6 et 7, le cache 130 est rapporté sur la platine 110 de manière à venir recouvrir les tronçons de couvercle de fermeture 140 et le support 120, pour parfaire l'esthétique de l'ensemble et assurer une bonne isolation au niveau de l'angle formé entre les socles 10 de tronçons de goulotte à raccorder.

A cet effet, les bords tombants 131 disposés à l'équerre du cache 130 assurent une continuité entre les ailes latérales 14, 15 intérieures des socles 10 de tronçons de goulotte à raccorder.

Comme le montrent plus particulièrement les figures 8b et 8c, la mise en place du cache 130 est réalisée par basculement de ce dernier de l'extérieur vers l'intérieur de l'angle formé entre les socles 10. Pour ce faire, le bord d'extrémité libre 134 du cache 130 est pris sous le rebord 114a porté par les parois latérales 114, 115 de la platine 110, et le cache 130 est basculé en direction des socles 10, de façon que les bords tombants 131 dudit cache 130 viennent se positionner contre les ailes latérales 14, 15 intérieures correspondantes des socles 10.

Lors du basculement du cache 130 vers les socles 10, la tourelle 132 et la dent d'encliquetage 133 de celui-ci viennent s'engager dans le puits 124 et le logement d'encliquetage 125 correspondant du support 120 pour que le cache 130 soit encliqueté sur le support et coincé, à son bord d'extrémité libre 134, par le rebord 114a de la platine.

Ainsi, le cache 130 est maintenu de manière rigide sur l'ensemble constitué par la platine 110 et le support 120.

Avantageusement, l'installateur peut ultérieurement intervenir dans un des deux socles 10 sans ouvrir l'autre. Il suffit, pour cela, qu'il retire le cache 130 et enlève le tronçon de couvercle de fermeture 140 considéré. De plus, la fermeture de l'angle formé entre les deux socles 10 est réalisée par un des tronçons de couvercle de fermeture d'un desdits socles, ce qui minimise le nombre de pièces utilisées.

En référence aux figures 9 à 13, nous allons maintenant décrire la mise en place du dispositif d'angle plat ou de dérivation 100 représenté sur la figure 1 entre les mêmes socles 10 de tronçons de goulotte compartimentés chacun en deux compartiments à l'aide d'une cloison de fractionnement 150 mise en place sur les nervures 19 centrales desdits socles 10.

Comme le montre plus particulièrement la figure 9, les socles 10 sont positionnés de la même manière que ceux représentés sur la figure 3, et la platine 110 est également positionnée de la même manière entre ces socles 10.

Puis, chacune des cloisons de fractionnement 150 est rapportée sur chacun des fonds 11 des socles 10 en étant encliquetée par son pied 151 sur chaque nervure 19 centrale portée par chaque fond 11 de chaque socle 10 (voir figure 10).

On obtient ainsi, pour chaque socle 10, deux compartiments distincts séparés par la cloison de fractionnement 150.

Avantageusement, chaque cloison de fractionnement 150 s'étendant également au-delà de chaque socle 10 sur le fond de raccordement 111 de la platine 110, en étant maintenue au niveau de son pied 151 par lesdites plaquettes 119, et, de cette manière, la continuité des différents compartiments desdits socles 10 est assurée au niveau de l'angle formé entre ceux-ci.

Puis, comme le montre la figure 10, deux tronçons de couvercle de fermeture 140' sont mis en place dans chacun des compartiments extérieurs des socles 10 de tronçons de goulotte à raccorder.

Un premier tronçon de couvercle de fermeture 140' du compartiment extérieur du socle 10 ne supportant pas le support 120 est monté entre le retour 17 de l'aile latérale 15 extérieure de ce socle 10 et le retour 153 de la cloison de fractionnement 150 portée par ledit socle 10, de telle sorte qu'une partie de ce tronçon de couvercle de fermeture 140' s'étend au-dessus du fond de raccordement 111 de la platine 110 pour venir en appui contre la face supérieure du plot 118' de la paroi latérale 114 de la platine 110. Ce tronçon de couvercle de fermeture 140' est également supporté par le crochet 117 de l'autre paroi latérale 115 de la platine 110.

Un deuxième tronçon de couvercle de fermeture 140' est mis en place sur le compartiment extérieur du socle 10 destiné à supporter le support 120, entre le retour 16 de l'aile latérale 14 extérieure de ce socle 10 et le retour 153 de la cloison de fractionnement 150 portée par ce socle 10, de telle sorte qu'une partie de ce tronçon de couvercle de fermeture 140' s'étend au-dessus du fond de raccordement 111 de la platine 110 en étant supportée par la face supérieure du plot 118 et par le moyen de rainure 116 de la paroi latérale 114 de la platine 110.

Pour ce faire, la patte longitudinale 140'a du tronçon de couvercle de fermeture 140 correspondant s'engage dans le moyen de rainure 116 porté par ladite paroi latérale 114 de la platine 110, ce moyen de rainure 116 prolongeant la gorge formée par le retour 16 de l'aile latérale 14 correspondante du socle 10 concerné.

Comme le montre la figure 10, les compartiments de chacun des socles 10 de tronçons de goulotte à raccorder sont donc prolongés au niveau de la platine et fermés individuellement par les tronçons de couvercle de fermeture 140' correspondants.

Puis, comme le montre la figure 11, le support 120 est mis en place sur un socle 10 au niveau de son compartiment intérieur non encore fermé, à la jonction entre le socle 10 et la platine 110.

Pour ce faire, ce support 120 est raccourci en longueur en enlevant deux modules séparables 120A, 120B. Il est rapporté entre le retour 17 de l'aile latérale 15 et le retour 153 de la cloison de fractionnement 150 du socle 10, de telle sorte que ses bords tombants 127 disposés à l'équerre assurent la continuité entre les parties supérieures des ailes latérales 15, 14 intérieures des socles 10.

Puis, les tronçons de couvercle de fermeture 140' des compartiments intérieurs des socles 10 sont mis en place sur lesdits compartiments, comme le montre plus particulièrement la figure 12.

Un premier tronçon de couvercle de fermeture 140' est mis en place sur le socle 10 ne supportant pas le support 120, entre l'aile latérale 14 intérieure de celui-ci et sa cloison de fractionnement 150. Ce tronçon de couvercle de fermeture 140' est également engagé dans la gorge 123 du support 120 pour être supporté sur toute sa longueur.

A cet effet, un deuxième tronçon de couvercle de fermeture 140' est mis en place entre l'aile latérale 15 située à l'intérieur de l'angle du socle 10 sur lequel est rapporté le support 120 correspondant et la cloison de fractionnement 150 portée par ce socle, de telle manière que son bord d'extrémité coupé 140'c vient prendre appui sur le support 120 en étant en butée contre les extrémités libres 126a des plots 126 de celui-ci.

Ainsi, comme le montre la figure 12, à l'état fermé des socles 10 de tronçons de goulotte à raccorder, chacun des compartiments se prolonge au niveau de l'angle et est fermé individuellement par les tronçons de couvercle de fermeture 140.

On peut alors intervenir dans un des compartiments sans ouvrir les autres compartiments, ce qui est particulièrement avantageux.

Puis, de façon à parfaire l'esthétique de l'ensemble, le cache 130 est rapporté sur la platine 110 pour recouvrir l'ensemble des tronçons de couvercle de fermeture 140' ainsi que le support et établir la jonction entre les ailes latérales 14, 15 intérieures des socles 10 (voir figure 13).

Le cache 130 est mis en place de la même manière que celui décrit précédemment en référence aux figures 8a à 8c.

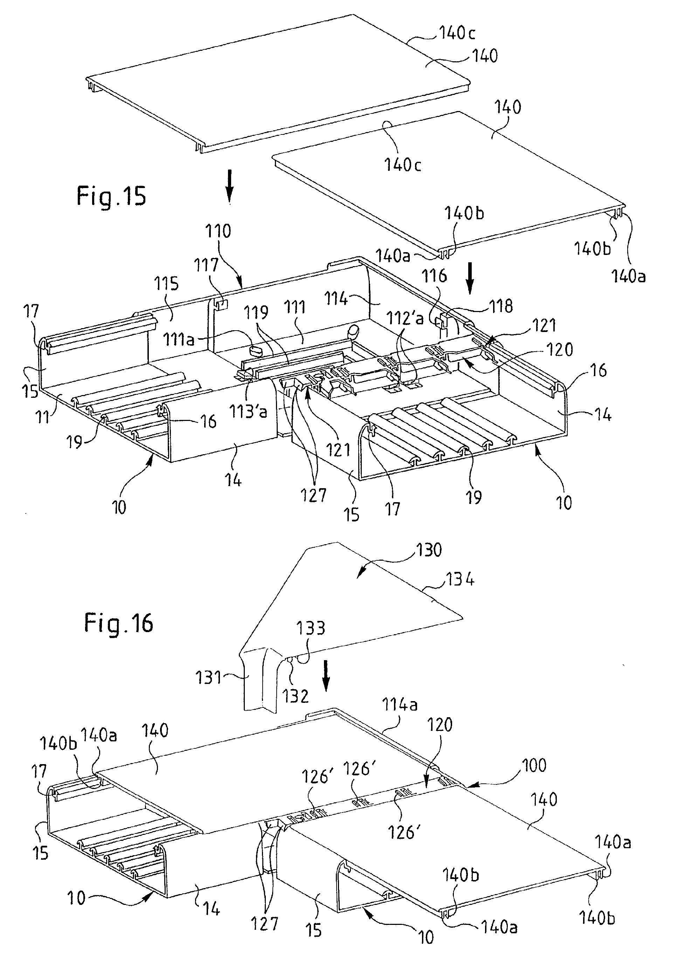

Sur les figures 15 et 16, on a représenté deux étapes principales de la mise en place entre les deux socles 10 de tronçons de goulotte de la variante du dispositif d'angle plat ou de dérivation 100 comprenant le support 120 représenté sur la figure 14.

Les figures 15 et 16 correspondent en tous points aux figures 5 et 6, mis à part l'utilisation d'un support 120 légèrement différent. On se reportera alors, pour la description de ces figures 15 et 16, à celle des figures 5 et 6, en considérant que le support 120 utilisé est maintenant celui représenté sur la figure 14.

La présente invention n'est nullement limitée aux modes de réalisation décrits et représentés, mais l'homme du métier saura y apporter toute variante conforme à son esprit.

## Revendications

1. Dispositif d'angle plat ou de dérivation (100) à disposer entre les socles (10) d'au moins deux tronçons de goulotte formant entre eux un angle dans un même plan, ledit dispositif comprenant, d'une part, une platine (110) présentant un fond de raccordement (111) des fonds (11) desdits socles (10) et au moins deux parois latérales (114, 115) situées sur au moins deux bords dudit fond de raccordement (111), et, d'autre part, un cache (130) à rapporter sur ladite platine (110) au-dessus dudit fond de raccordement (111), **caractérisé en ce qu'**il comporte au moins un support (120) à rapporter sur un desdits socles (10), entre les ailes latérales (14, 15) de ce socle (10) ou entre une de ses ailes latérales (15) et une cloison de fractionnement (150) portée par le fond (11) dudit socle, ce support (120) comprenant des moyens de montage (124, 125) dudit cache (130) et étant destiné à supporter l'extrémité coupée (140c ; 140'c) d'un tronçon de couvercle de fermeture (140 ; 140') dudit socle (10) ou d'un compartiment de ce dernier, et **en ce qu'**au moins une desdites parois latérales (114, 115) de ladite platine (110) porte, sur sa face interne, un moyen de support (118, 118', 117) d'au moins un tronçon de couvercle de fermeture (140 ; 140') de l'autre desdits socles (10) ou d'un compartiment de ce socle, de telle sorte que lesdits tronçons de couvercle de fermeture (140 ; 140') des deux socles (10) s'étendent au-dessus du fond de raccordement (111) de ladite platine (110) et participent ainsi à sa fermeture, le cache (130) étant adapté à recouvrir lesdits tronçons de couvercle de fermeture (140 ; 140') mis en place sur lesdits socles (10).

2. Dispositif (100) selon la revendication 1, **caractérisé en ce que** ledit support (120) est situé du côté intérieur de l'angle formé par les socles (10) desdits tronçons de goulotte.

3. Dispositif (100) selon l'une des revendications 1 ou 2, **caractérisé en ce que** le support (120) se présente sous la forme d'une barrette portant, à ses extrémités libres, des moyens d'encliquetage (121) sur les retours (16, 17) des ailes latérales (14, 15) du socle (10) du tronçon de goulotte ou sur les retours (17, 153) d'une aile latérale (15) et d'une cloison de fractionnement (150) de ce socle (10).

4. Dispositif (100) selon la revendication 3, **caractérisé en ce que** la face externe (122) du support (120) porte au moins un plot (126) disposé transversalement à la direction longitudinale dudit support (120) et dont une extrémité (126a) forme une butée pour le bord d'extrémité coupé (140c ; 140'c) d'un tronçon de couvercle de fermeture (140 ; 140').

5. Dispositif (100) selon la revendication 4, **caractérisé en ce que** le support (120) porte, sur sa face externe (122), une pluralité de plots (126) répartis sur toute la longueur dudit support (120).

6. Dispositif (100) selon la revendication 3, **caractérisé en ce que** la face externe (122) du support (120) porte au moins une nervure (126') disposée transversalement à la direction longitudinale du support (120) et dont une extrémité (126'a) forme une butée pour le bord d'extrémité coupé (140c ; 140'c) d'un tronçon de couvercle de fermeture (140 ; 140').

7. Dispositif (100) selon la revendication 6, **caractérisé en ce que** le support (120) porte, sur sa face externe (122), une pluralité de nervures (126') réparties sur toute la longueur dudit support (120).

8. Dispositif (100) selon l'une des revendications 1 à 7, **caractérisé en ce que** ledit support (120) comporte une gorge (123), qui s'étend sur un de ses côtés longitudinaux, et qui est apte à recevoir une patte longitudinale (140a) portée par le tronçon de couvercle de fermeture (140 ; 140') de l'autre socle (10) par rapport à celui sur lequel est rapporté ledit support (120), ou d'un compartiment de ce socle (10).

9. Dispositif (100) selon l'une des revendications 1 à 8, **caractérisé en ce que** ledit support (120) est constitué de modules séparables (120A, 120B, 120C, 120D).

10. Dispositif (100) selon la revendication 9, **caractérisé en ce que** chaque module séparable (120A, 120B, 120C, 120D) dudit support (120) comporte, à son extrémité la plus éloignée d'un autre module séparable adjacent, des moyens d'encliquetage (121) sur le retour (16, 153) d'une aile latérale (14) ou d'une cloison de fractionnement (150) du socle (10).

11. Dispositif (100) selon l'une des revendications 9 ou 10, **caractérisé en ce que** le support (120) comporte un module de base (120E) rattaché à un module séparable (120D). ce module de base (120E) étant positionné le plus à l'intérieur de l'angle formé par les socles (10) de tronçons de goulotte, ce module de base (120E) comportant, à ses deux extrémités, des moyens d'encliquetage (121) sur les retours (16, 17) des ailes latérales (14, 15) dudit socle (10) ou sur les retours (17, 153) d'une aile latérale (15) et d'une cloison de fractionnement (150) de ce socle (10), et comprenant lesdits moyens de montage (124, 125) dudit cache (130).

12. Dispositif (100) selon l'une des revendications 1 à 11, **caractérisé en ce que** le support (120) comporte, à une extrémité libre, deux bords tombants (127) disposés à l'équerre et aptes à établir la jonction entre les ailes latérales (14, 15) intérieures desdits socles (10).

13. Dispositif (100) selon l'une des revendications 1 à 12, **caractérisé en ce que** les moyens de montage du cache (130) sur le support (120) comprennent, d'une part, sur ledit support (120), un puits (124) et un logement d'encliquetage (125) qui débouchent sur sa face externe (122), et, d'autre part, sur la face interne dudit cache (130), une tourelle (132) destinée à s'engager dans ledit puits (124) et une dent d'encliquetage (133) destinée à s'introduire dans ledit logement d'encliquetage (125) pour s'accrocher sur un bord interne (125a) de ce dernier.

14. Dispositif (100) selon l'une des revendications 1 à 13, **caractérisé en ce que** les parois latérales (114, 115) de ladite platine (110) sont disposées à l'équerre pour établir la jonction entre les ailes latérales (14, 15) extérieures des socles (10) de tronçons de goulotte à raccorder, et portent chacune, sur leur face interne, des moyens de support (118, 118', 117) d'un tronçon de couvercle de fermeture (140) de l'autre socle (10) par rapport à celui sur lequel est rapporté ledit support (120), ou d'un compartiment de ce socle (10).

15. Dispositif (100) selon l'une des revendications 1 à 14, **caractérisé en ce qu'**une des parois latérales (114) de la platine (110) porte, sur sa face interne, des moyens de support (116, 118) d'un tronçon de couvercle de fermeture (140') d'un compartiment du socle (10) sur lequel est rapporté ledit support (120).

16. Dispositif (100) selon l'une des revendications 1 à 15, **caractérisé en ce que** les parois latérales (114, 115) disposées à l'équerre comprennent un rebord (114a) permettant le maintien du cache (130) sur la platine (110).

17. Dispositif (100) selon l'une des revendications 1 à 16, **caractérisé en ce que** le fond de raccordement (111) de la platine (110) porte des plaquettes (119) s'étendant perpendiculairement audit fond de raccordement (111) et disposées deux à deux à l'équerre dans le prolongement de nervures (19) portées par les fonds (11) des socles (10) pour l'encliquetage de cloisons de fractionnement (150), ces plaquettes (119) étant chacune destinées à soutenir la partie de chaque cloison de fractionnement (150) qui s'étend au-delà de chaque socle (10) sur le fond de raccordement (111) de ladite platine (110).

18. Dispositif (100) selon l'une des revendications 1 à 17, **caractérisé en ce que** le fond de raccordement (111) de la platine (110) présente deux bords libres (112, 113) à l'équerre destinés chacun à s'abouter à un bord coupé (12) d'un fond (11) d'un socle (10) de tronçon de goulotte à raccorder, chaque bord libre (112, 113) portant en saillie deux languettes flexibles (112a, 113a) aptes, lors de la mise en place de la platine (110) entre les deux socles (10), à se positionner de part et d'autre d'une nervure (19) portée par le fond (11) d'un socle (10) pour ajuster le positionnement de ladite platine (110) par rapport auxdits socles (10).

19. Dispositif (100) selon l'une des revendications 1 à 18, **caractérisé en ce que** le fond de raccordement (111) de la platine (110) comporte deux parties sécables disposées à l'équerre.

20. Dispositif (100) selon l'une des revendications 1 à 19, **caractérisé en ce que** le cache (130) comporte à une extrémité deux bords tombants (131) disposés à l'équerre, aptes à établir la jonction entre les ailes latérales (14, 15) intérieures desdits socles (10).

21. Dispositif (100) selon l'une des revendications 1 à 20, **caractérisé en ce que** le cache (130) comporte deux parties sécables (130a, 130b) disposées à l'équerre.
